# EUROPÄISCHE PATENTSCHRIFT

(11) **EP 0 640 629 B1**
(45) Veröffentlichungstag und Bekanntmachung des Hinweises auf die Patenterteilung: **17.09.1997**
(21) Anmeldenummer: 94109968.1
(22) Anmeldetag: 28.06.1994
(51) Int. Cl.: C08F 246/00, C04B 24/26, C09J 157/04, C09D 157/04

(54) **Verfahren zur Herstellung von wässrigen silanolgruppenmodifizierten Kunststoffdispersionen**
Process for the preparation of aquous silanol groups modified plastics
Procédé de préparation de dispersions aqueuses de matières plastiques modifiées avec des groupes silanols

(30) Priorität: 30.08.1993 DE 4329089
(43) Veröffentlichungstag der Anmeldung: 01.03.1995
(73) Patentinhaber: POLYMER LATEX GmbH & Co. KG, 45764 Marl (DE)
(72) Erfinder: Hahn, Karl, Dr., D-45768 Marl (DE); Dören, Klaus, Dr., D-45772 Marl (DE)

(56) Entgegenhaltungen:
- EP-A- 0 214 696
- EP-A- 0 401 496

## Beschreibung

Gegenstand der Erfindung ist ein einstufige Verfahren zur Herstellung von wäßrigen silanolgruppenmodifizierten Kunststoffdispersionen durch polymeranaloge Umsetzung mit Epoxysilanen. Bevorzugt werden die so erhaltenen Bindemittel im Bautenschutzbereich eingesetzt.

Zur Herstellung von wäßrigen silanolgruppenmodifizierten Kunststoffdispersionen sind im Prinzip mehrere Verfahren bekannt.

Ein häufig beschriebenes Verfahren ist die nachträgliche chemische Modifizierung von Kunststoffdispersionen.

In EP 0 214 696 werden wäßrige Dispersionen offenbart, die jedoch keine stickstoffhaltigen Monomere beinhalten. Aus Seite 2, Zeile 61 ff. geht hervor, daß die Umsetzung mit Epoxysilan getrennt von der Polymerisation, die bei 80 °C erfolgt (Beispiel 1), nachträglich zwischen 20 bis 30 °C stattfindet.

Die nachträgliche Umsetzung wird auch offensichtlich bei der EP 0 292 155 als notwendig erachtet (Seite 2, Zeile 44 sowie Beispiel 1 ff.).

Die Modifizierung mit Epoxysilanen, allerdings an nicht carboxylierten Vinylacetat-Copolymerdispersionen mittels eines zweistufigen Verfahrens, wobei die Dispersion zwischen 20 - 60 °C modifiziert wird (S. 2, Z. 20 ff. und Beispiele), wird in der EP 0 373 860 offenbart. Als "post-addition" findet auch die Epoxysilan-Modifizierung der EP 0 375 244 statt.

Die Möglichkeit, das fertige Compound, z. B. Klebemassen, aus den Bestandteilen Bindemittel, Epoxysilan und weiteren Hilfsstoffen direkt zu erzeugen, ist ebenfalls aus US 4 032 487 und US 4 077 932 bekannt.

EP-A-0 401 496 beansprucht eine spezielle Dispersion, hergestellt nach einem zweistufigen Prozeß, wie z.B, Beispiel 1 belegt.

Die zweistufige Herstellungsweise nach den oben genannten Verfahren steht einer technischen Realisierung entgegen. Durch die nachgeschaltete Umsetzung mit Epoxysilanen unter anderen Bedingungen als die der eigentlichen Polymerisation verschlechtert sich zumindest die Raum-Zeit-Ausbeute und die Herstellungskosten werden erheblich erhöht.

Es bestand die Aufgabe, die Nachteile der Verfahren des Standes der Technik zu beseitigen.

Es wurde überraschend gefunden, daß wäßrige silanolgruppenmodifizierte Kunststoffdispersionen mit guten anwendungstechnischen Parametern durch Polymerisation von
A) 90 bis 99,2 Gew.-% mindestens eines ungesättigten Monomeren,
B) 0,5 bis 5 Gew.-% -% mindestens einer ungesättigten Carbonsäure,
C) 0,1 bis 2 Gew.-% mindestens eines weiteren funktionellen ungesättigten Monomeren,
   und
D) 0,2 bis 3 Gew.-% niedermolekularer Epoxysilane der allgemeinen Formel 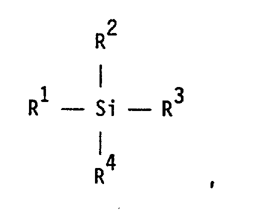 in welcher R¹ einen, eine reaktive Oxirangruppe aufweisenden (Cyclo)alkylrest, der Ethergruppen und/oder einen aromatischen Rest aufweisen kann,
   R² einen (Cyclo)alkoxyrest, der Ethergruppen aufweisen kann, einen (Cyclo)alkyl-, Aryl- oder Aralkylrest,
   R³ und R⁴ unabhängig voneinander einen (Cyclo)alkoxyrest, der Ethergruppen aufweisen kann, oder einen Hydroxylrest bedeuten, hergestellt werden können, wobei das Verfahren dadurch gekennzeichnet ist, daß die Zufuhr der zur Modifizierung durch polymeranaloge Umsetzung erforderlichen Epoxisilane D in Gegenwart mindestens eines oder mehrerer der Monomeren A bis C erfolgt, wobei das Epoxysilan
   i) von Beginn der Polymerisation über einen bestimmten Zeitraum oder über den gesamten Zeitraum der Zulaufzeit
      oder
   ii) nach einem bestimmten Zeitraum nach Beginn der Zulaufzeit
   zudosiert wird, und die Polymerisationsreaktion semikontinuierlich durchgeführt wird.

Das Epoxysilan kann in reiner Form dem Reaktor zugesetzt werden.

Bevorzugte Ausführungsform ist jedoch die Lösung des Epoxysilans in den Monomeren A bzw. in einer Teilmenge derselben.

Diese Lösung kann - gegebenenfalls mit weiteren Komponenten der Gruppen B und C - dosiert werden, bzw. aus dieser Lösung wird mit den wasserlöslichen Bestandteilen der Polymerisationsrezeptur eine Monomeremulsion erzeugt.

Diese Monomeremulsion wird vorzugsweise semikontinuierlich dosiert.

Die Herstellung des erfindungsgemäßen Produktes erfolgt bevorzugt nach einem semikontinuierlichen Verfahren. Hierbei werden die Monomeren aus der Gruppe A meistens in geeigneten Kombinationen eingesetzt, um eine bestimmte Mindestfilmbildetemperatur zu realisieren.

Bezüglich der Einzelheiten und des Ausmaßes der Umsetzungen mit dem Epoxysilan können hierbei keine exakten Angaben gemacht werden.

Ihre Zufuhr kann getrennt oder vereinigt als Monomer- und Emulsionszulauf stattfinden. Der Polymeraufbau kann auch so gesteuert werden, daß er in Richtung eines Kern/Schale-Aufbaus stattfindet.

Zur Polymerisation werden gebräuchliche Emulgatoren, z. B. anionische und nichtionische Emulgatoren eingesetzt, z. B. Alkylbenzoesulfonate, Alkylsulfate, Paraffinsulfonate, Diphenylethersulfonate, sulfatierte Alkohol- oder oder Alkylphenolethoxylate sowie als nichtionische Emulgatoren, Alkohol-Alkylphenolethoxylate.

Die Polymerisation findet bevorzugt mit Hilfe wasserlöslicher Initiatoren statt, z. B. Peroxodisulfate, t-Butylhydrogenoxid, Wasserstoffperoxid.

Es ist möglich, die Polymerisation mit Hilfe von sogenannten Redoxsystemen zu initiieren, d. h. der Kombination der wasserlöslichen Initiatoren mit geeigneten Reduktionsmitteln, wie z. B. Na₂SO₃, Na₂S₂O₃, Na₂S₂O₄, Na₂S₂O₅, Rongalit, Ascorbinsäure.

Geeignete Kombinationen sind Natriumperoxodisulfat/Natriumdisulfit, t-Butylhydroperoxid/Rongalit, Wasserstoffperoxid/Ascorbinsäure.

Redoxsysteme können durch Spuren von Metallsalzen, z. B. Eisen- oder Kupfersalze, aktiviert werden.

Zur Polymerisation können die gebräuchlichen Hilfsstoffe zum Einsatz kommen, z. B. Puffersubstanzen wie Phosphate oder Komplexbildner wie Ethylendiamintetraessigsäure in Form ihrer Salze.

In bestimmten Fällen kann auch die Polymerisation in Gegenwart wasserlöslicher Polymerer stattfinden, gegebenenfalls in Kombination mit Emulgatoren.

Durch chemische und physikalische Verfahren können die Dispersionen von restlichen Monomerbestandteilen und gegebenenfalls polymerisationsinerten flüchtigen Begleitstoffen befreit werden, z. B. durch Desodorierung im Vakuum oder destillativ.

Polymerisiert wird bevorzugt bei schwach saurem pH-Wert, z. B. zwischen pH 1,5 bis 6, bevorzugt zwischen pH 2,0 bis 4,5.

Die Polymerisationstemperatur kann zwischen 40 bis 90 °C liegen, bevorzugt zwischen 60 bis 85 °C.

Zur Polymerisation geeignete Monomere A sind lineare oder verzweigte Vinylester mit 1 bis 18 C-Atomen, Vinylaromaten, Diene, (Meth)acrylester mit 1 bis 12 C-Atomen, Ester der Malein- bzw. Fumarsäure mit 1 bis 8 C-Atomen, α-Olefine und Vinylchlorid.

Diese Monomeren A können allein oder bevorzugt in geeigneten Kombinationen verwendet werden, um das angestrebte anwendungstechnische Eigenschaftsbild, wie z. B. Glastemperatur und mechanische Eigenschaften u. a. zu erreichen.

Besonders bevorzugt werden jedoch Styrol, Methylmethacrylat, n-Butylacrylat, 2-Ethylhexylacrylat, Butadien, eingesetzt.

Die Polymerisation erfolgt unter Verwendung von 0,5 bis 5 Gew.-% mindestens einer olefinisch ungesättigten Mono- oder Dicarbonsäure (Monomere B). Geeignete ungesättigte Carbonsäuren sind (Meth)acrylsäure, Maleinsäure, Fumarsäure oder Itaconsäure, wobei besonders bevorzugt (Meth)acrylsäure zum Einsatz kommt.

Als weitere ungesättigte funktionelle Monomere C, eingesetzt von 0,1 bis 2 Gew.-%, die vorteilhafterweise zum Einsatz kommen können, sind insbesondere die Amide der o. g. ungesättigten Carbonsäuren, Sulfonsäuren, Hydroxylalkyl(meth)acrylate und Silane. Bevorzugt wird (Meth)acrylamid eingesetzt.

Als Monomere D sind insbesondere 3-Glycidyloxypropylthrimethoxysilan, 3-Glycidyloxypropyltriethoxysilan, 3-Glycidyloxypropylmethyldimethoxysilan,3-Glycidyloxypropyl-tris(2-methoxyethoxy)silan und 3(3,4-Epoxycyclohexyl)ethyltrimethoxysilan eingesetzt.

Je nach dem vorgesehenen Einsatzgebiet können auch zusätzlich Molekulargewichtsregler und/oder vernetzend wirkende Monomere zum Einsatz gelangen.

Die auf diesem Wege erhaltenen Bindemittel sind besonders geeignet zur Herstellung von Dispersionsfarben, Anstrichmitteln, Kunststoffputz, Bauklebern.

### Herstellungsbeispiele

Falls keine anderen Angaben erfolgen, handelt es sich um Gewichtsteile und Gew. -%.

### Beispiel 1

Herstellung einer silanolgruppenmodifizierten Styrol/n-Butylacrylat-Dispersion für den Einsatz in zementfreien Fliesenklebern.

In 60 Teilen vollentsalztem Wasser werden 0,2 Tl. eines Na-Salzes eines sulfatierten Nonylphenols mit ca. 13 Mol Ethylenoxid, je 0,01 Tl. K₃PO₄ und Tetranatriumethylendiamintetraacetat sowie 0,005 Tl. (NH₄)₂S₂O₈ gelöst. Diese Lösung wird in einem 12 l V2A-Reaktor mit Doppelmantel und Blattrührer mit 1 °/Min. auf 80 °C geheizt. Nach 30 Min. bei 80 °C erfolgt der Zulauf der nachstehend aufgeführen Mischungen.

| Zulauf 1 (als Emulsionszulauf) | |
|---|---|
| 23 Tl. | vollentsalztes Wasser |
| 45,55 " | Styrol |
| 50,0 " | n-Butylacrylat |
| 2,25 " | Acrylsäure |
| 1,0 " | Acrylamid |
| 1,2 " | 3-Glycidyloxypropyltrimethoxysilan (gelöst in Styrol/n-Butylacrylat |
| 0,8 " | des o. g. anionischen Emulgators |
| 0,6 " | eines ethoxylierten C₁₂-Alkohols mit ca. 17 Mol Ethylenoxid |
| 0,04 " | K₃PO₄ |

| Zulauf 2 | |
|---|---|
| 15 Tl. | H₂O |
| 0,8 " | (NH₄)₂S₂O₈ |

### Dosierbedingungen

Nach 1 Min. des Zulaufs 2 Beginn des Zulaufs 1. Zulauf 1 erfolgt in 6 h, Zulauf 2 in 7 h. 3 h nach Ende des Zulaufs 2 erfolgt noch ein einmaliger Zusatz von 0,1 Tl. (NH₄)₂S₂O₈/2 Tl. H₂O. Nach weiteren 2 h war die Polymerisation beendet. Es wurde unter Rühren abgekühlt, filtriert und mit Na0H auf pH 7,0 eingestellt.

Nach pH-Einstellung betrug der Feststoff der Dispersion 49,8 %, die Oberflächenspannung der 25 % Dispersion lag bei 45,3 N/mm ². Die Dispersion hatte eine Mindestfilmbildetemperatur von 14 °C.

### Vergleichsbeispiel A

Die Polymerisation erfolgte entsprechend Beispiel 1, jedoch ohne Zusatz des Epoxysilans. Die Modifizierung mit dem Epoxysilan erfolgte nach dem Abkühlen der sauren Dispersion bei 50 °C innerhalb 2 h.

Die Einstellung des pH-Wertes auf pH 7,0 erfolgte 24 h später mit Na0H.

Beide Dispersionen wurden zur Herstellung eines zementfreien Fliesenklebers gemäß der Rezeptur in EP 0 401 496 eingesetzt.

**Tabelle 1**

| Charakterisierung der Klebemasse | | | |
|---|---|---|---|
| Beispiel | Naßhaftzugfestigkeit ¹⁾ N/mm² | Kleberviskosität mPa·s | |
| | | 1 d RT | 14 d/50 °C |
| 1 | 0,73 | 90 000 | 94 000 |
| A | 0,53 | 83 000 | 96 000 |

| | | | |
|---|---|---|---|
| ¹⁾ nach 7 Tagen Trocken- und 7 Tagen Wasserlagerung | | | |

### Beispiel 2

Herstellung einer weichen Styrol/n-Butylacrylat-Dispersion für Farben und Kunststoffdispersionsputze.

Dieses Herstellungsverfahren orientiert sich an Beispiel 1. In der Vorlage wurden jedoch 0,25 Teile des anionischen Emulgators eingesetzt und statt (NH₄)₂S₂O₈ wurde Na₂S₂O₈ verwendet.

| Zulauf 1 hatte folgende Zusammensetzung: | |
|---|---|
| 20 Tl. | vollentsalztes Wasser |
| 37,6 " | Styrol |
| 60 " | n-Butylacrylat |
| 1,5 " | Acrylsäure |
| 0,5 " | Acrylamid |
| 0,4 " | 3-Glycidyloxypropyltrimethoxysilan (gelöst in Styrol/n-Butylacrylat) |
| 0,9 " | des o. g. anionischen Emulgators |
| 0,6 " | des o. g. nichtionischen Emulgators |
| 0,04 " | K₃PO₄ |

| Zulauf 2 | |
|---|---|
| 18 Tl. | vollentsalztes Wasser |
| 0,4 " | Na₂S₂O₈ |

Die Polymerisationsbedingungen entsprachen Beispiel 1. Zur Nachinitiierung wurden statt 0,1 Teilen (NH₄)₂S₂O₈ 0,05 Teile Na₂S₂O₈ eingesetzt.

Die auf pH 7,0 mit NaOH eingestellte Dispersion wurde mit Wasserdampf zur Entfernung von Restmonomeren und flüchtigen Begleitstoffen desodoriert und auf pH 7,5 (Na0H) eingestellt.

Der Feststoff dieser Dispersion betrug 51,0 % und die Oberflächenspannung der 25 % Dispersion lag bei 46,3 N/mm² , die Mindestfilmbildetemperatur lag bei 1 °C.

### Vergleichsbeispiel B

Die Herstellung erfolgte entsprechend Beispiel 2, aber ohne das Epoxysilan. Dessen Zusatz fand in einer 2. Stufe statt nach beendeter Polymerisation (s. Vergleichsbeispiel A).

Die Dispersionen der Beispiele 2 und 2 B wurden zur Herstellung von weichmacher- und lösungsmittelfreien Farben mit 12 % Bindemittel eingesetzt (s. Tabelle 2) gemäß DE-OS 43 04 569.

**Tabelle 2**

| Charakterisierung der Dispersionsfarben | | | |
|---|---|---|---|
| Beispiel | Viskosität der Farbe ¹⁾ mPa·s | | Pigmentbindevermögen ²⁾ |
| | 1 d/20 °C | 28 d/50 °C | Scheuercyclen n. 28 d |
| 2 | 1 780 | 2 150 | 2 225 |
| B | 1 900 | 2 350 | 2 190 |

| | | | |
|---|---|---|---|
| ¹⁾ nach DIN 53 019 | | | |
| ²⁾ nach DIN 53 778 | | | |

## Patentansprüche

1. Verfahren zur Herstellung von wäßrigen silanolgruppenmodifizierten Kunststoffdispersionen, erhalten durch Polymerisation von
A) 90 bis 99,2 Gew.-% mindestens eines ungesättigten Monomeren,
B) zusätzlich 0,5 bis 5 Gew.-% mindestens einer ungesättigten Carbonsäure,
C) 0,1 bis 2 Gew.-% mindestens eines weiteren funktionellen ungesättigten Monomeren,
und
D) 0,2 bis 3 Gew.-% niedermolekularer Epoxysilane der allgemeinen Formel 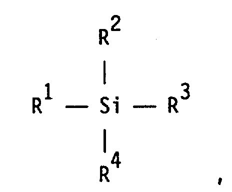 in welcher R¹ einen, eine reaktive Oxirangruppe aufweisenden (Cyclo)alkylrest, der Ethergruppen und/oder einen aromatischen Rest aufweisen kann,
R² einen (Cyclo)alkoxyrest, der Ethergruppen aufweisen kann, einen (Cyclo)alkyl-, Aryl- oder Aralkylrest,
R³ und R⁴ unabhängig voneinander einen (Cyclo)alkoxyrest, der Ethergruppen aufweisen kann, oder einen Hydroxylrest bedeuten,
dadurch gekennzeichnet,
daß die Modifizierung durch polymeranaloge Umsetzung der Epoxysilane D in Gegenwart mindestens eines oder mehrerer der Monomeren A - C erfolgt, wobei das Epoxysilan
i) von Beginn der Polymerisation über einen bestimmten Zeitraum oder über dem gesamten Zeitraum der Zulaufzeit
oder
ii) nach einem bestimmten Zeitraum nach Beginn der Zulaufzeit
zudosiert wird, und die Polymerisationsreaktion semikontinuierlich durchgeführt wird.

2. Verfahren nach Anspruch 1,
dadurch gekennzeichnet,
daß als Monomere A lineare oder verzweigte Vinylester mit 1 bis 18 C-Atomen, Vinylaromaten, Diene, (Meth)acrylester mit 1 bis 12 C-Atomen, Ester der Malein- bzw. Fumarsäure mit 1 bis 8 C-Atomen, α-Olefine oder Vinylchlorid, eingesetzt werden.

3. Verfahren nach den Ansprüchen 1 und 2,
dadurch gekennzeichnet,
daß als Monomere B (Meth)acrylsäure, Maleinsäure, Fumarsäure oder Itaconsäure, eingesetzt werden.

4. Verfahren nach den Ansprüchen 1 bis 3,
dadurch gekennzeichnet,
daß als funktionelle ungesättigte Monomere C Amide von ungesättigten Carbonsäuren, ungesättigte Sulfonsäuren, Hydroxylalkyl(meth)acrylate oder ungesättigte Silane, eingesetzt werden.

5. Verfahren nach Anspruch 4,
dadurch gekennzeichnet,
daß die Amide von (Meth)acrylsäure, Maleinsäure, Fumarsäure oder Itaconsäure, eingesetzt werden.

6. Verfahren nach mindestens einem der Ansprüche 1 bis 5,
dadurch gekennzeichnet,
daß als Monomere D 3-Glycidyloxypropyltrimethoxysilan, 3-Glycidyloxypropyltriethoxysilan, 3-Glycidyloxypropylmethyldimethoxysilan, 3-Glycidyloxypropyl-tris(2-methoxyethoxy)silan, 3(3,4-Epoxycyclohexyl)ethyltrimethoxysilan eingesetzt werden.

7. Verfahren nach mindestens einem der Ansprüche 1 bis 6,
dadurch gekennzeichnet,
daß Molekulargewichtsregler und/oder vernetzende Monomere eingesetzt werden.

8. Verfahren nach mindestens einem der Ansprüche 1 bis 7,
dadurch gekennzeichnet,
daß die Polymerisationstemperatur zwischen 40 bis 90 °C, bevorzugt 60 - 85 °C, und der pH-Wert der Polymerisation zwischen 1,5 bis 6,0, bevorzugt 2,0 - 4,5 liegt.

9. Verwendung der Kunststoffdispersionen, hergestellt nach mindestens einem der Ansprüche 1 bis 8, zur Herstellung von Bindemittel für den Bautenschutzbereich.

10. Verwendung gemäß Anspruch 9 zur Herstellung von Anstrichmitteln - insbesondere Dispersionensfarben, Kunststoffputzen und Bauklebern, insbesondere für Fliesenkleber.

## Claims

1. A process for preparing aqueous polymer dispersions modified with silanol groups and obtained by polymerization of
A) from 90 to 99.2% by weight of at least one unsaturated monomer,
B) in addition, from 0.5 to 5% by weight of at least one unsaturated carboxylic acid,
C) from 0.1 to 2% by weight of at least one further functional unsaturated monomer,
and
D) from 0.2 to 3% by weight of low molecular weight epoxysilanes of the general formula 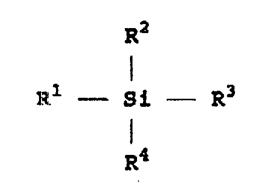 where X¹ is a (cyclo)alkyl radical which contains a reactive oxirane group and may contain ether groups and/or an aromatic radical,
R² is a (cyclo)alkoxy radical which may contain ether groups, or a (cyclo)alkyl, aryl or aralkyl radical,
R³ and R⁴ are each independently of one another, a (cyclo)alkoxy radical which may contain ether groups, or a hydroxyl radical, characterized in that the modification is carried out by polymer-analogous reaction of the epoxysilanes D in the presence of at least one or more of the monomers A-C, where the epoxysilane is metered in
i) before commencement of the polymerization over a certain period of time or over the entire time of the feed stream addition
or
ii) after a certain period of time after commencement of the feed stream addition,
and the polymerization reaction is carried out semicontinuouely.

2. A process according to claim 1, characterized in that linear or branched vinyl esters having from 1 to 18 carbon atoms, vinyl aromatics, dienes, (meth)acrylic esters having from 1 to 12 carbon atoms, esters of maleic or fumaric acid having from 1 to 8 carbon atoms, α-olefins or vinyl chloride are used as monomers A.

3. A process according to either of claims 1 and 2, characterized in that (meth)acrylic acid, maleic acid, fumaric acid or itaconic acid are used as monomers B.

4. A process according to any of claims 1 to 3, characterized in that amides of unsaturated carboxylic acids, unsaturated sulphonic acids, hydroxyalkyl (meth)acrylates or unsaturated silanes are used as functional unsaturated monomers C.

5. A process according to claim 4, characterized in that the amides of (meth)acrylic acid, maleic acid, fumaric acid or itaconic acid are used.

6. A process according to any of claims 1 to 5, characterized in that 3-glycidyloxypropyltrimethoxysilane, 3-glycidylozypropyltriethoxysilane, 3-glycidyloxypropylmethyldimethoxysilane, 3-glycidyloxypropyltris(2-methoxyethoxy)silane, 3-(3,4-epoxycyclohexyl)ethyltrimethoxysilane are used as monomers D.

7. A process according to any of claims 1 to 6, characterized in that molecular weight regulators and/or crosslinking monomers are used.

8. A process according to any of claims 1 to 7, characterized in that the polymerization temperature is from 40 to 90°C, preferably 60-85°C, and the pH of the polymerization is from 1.5 to 6.0, preferably 2.0-4.5.

9. Use of the polymer dispersions prepared according to any of claims 1 to 8 for producing binders for the building protection sector.

10. Use according to claim 9 for producing paints, in particular emulsion paints, polymer renders and building adhesives, in particular for tile adhesives.

## Revendications

1. Procédé pour la fabrication de dispersions aqueuses de polymères modifiés par des groupes silanols, obtenues par polymérisation de
A) 90 à 99,2 % en poids d'au moins un monomère insaturé,
B) en addition 0,5 à 5 % en poids d'au moins un acide carboxylique insaturé
C) 0,1 à 2 % en poids d'au moins un autre monomère fonctionnel insaturé, et
D) 0,2 à 3 % en poids d'époxy silane à faible poids moléculaire selon la formule générale 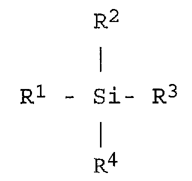 dans laquelle R¹ représente un radical (cyclo)alkyle comportant un groupe oxirane réactif, qui peut présenter des groupes éthers et/ou un radical aromatique,
R² représente un radical (cyclo)alcoxy, qui peut présenter des groupes éthers, un radical (cyclo)alkyle, aryle ou aralkyle,
R³ et R⁴ représentent indépendamment l'un de l'autre un radical (cyclo)alkoxy, qui peut présenter des groupes éthers, ou un radical hydroxyle,
caractérisé en ce que
la modification est réalisée au moyen d'une transformation analogue à une polymérisation des époxysilanes D en présence d'au moins un ou de plusieurs des monomères A - C, l'époxysilane étant ajouté
i) dès le début de la polymérisation, pendant une durée déterminée ou pendant la durée totale de l'addition ou
ii) après un délai déterminé suivant le début de l'addition,
et en ce que la réaction de polymérisation est effectuée en semi-continu.

2. Procédé selon la revendication 1,
caractérisé en ce que
sont mis en oeuvre en tant que monomères A, des esters vinyliques linéaires ou ramifiés comportant 1 à 18 atomes de carbone, des composés vinylaromatiques, des diènes, des esters (méth)acryliques comportant 1 à 12 atomes de carbone, des esters de l'acide maléique ou de l'acide fumarique comportant 1 à 8 atomes de carbone, des α-oléfines ou du chlorure de vinyle.

3. Procédé selon les revendications 1 et 2,
caractérisé en ce que
sont mis en oeuvre en tant que monomères B l'acide (méth)acrylique, l'acide maléique, l'acide fumarique ou l'acide itaconique.

4. Procédé selon les revendications 1 à 3,
caractérisé en ce que
sont mis en oeuvre en tant que monomères fonctionnels insaturés C des amides d'acides carboxyliques insaturés, des acides sulfoniques insaturés, des (méth)acrylates hydroxyalkyliques ou des silanes insaturés.

5. Procédé selon la revendication 4,
caractérisé en ce que
sont mis en oeuvre des amides d'acide (méth)acrylique, d'acide maléique, d'acide fumarique ou d'acide itaconique.

6. Procédé selon au moins une des revendications 1 à 5,
caractérisé en ce que
sont mis en oeuvre en tant que monomères D le 3-glycidyloxypropyltriméthoxysilane, le 3-glycidyloxypropyltriéthoxysilane, le 3-glycidyloxypropylméthyldiméthoxysilane, le 3-glycidyloxypropyl-tris(2-méthoxyéthoxy)silane, le 3,(3,4-époxycyclohéxyl)-éthyltriméthoxysilane.

7. Procédé selon au moins une des revendications 1 à 6,
caractérisé en ce que sont mis en oeuvre des régulateurs de poids moléculaire et/ou des monomères réticulants.

8. Procédé selon au moins une des revendications 1 à 7,
caractérisé en ce que
la température de polymérisation est comprise entre 40 et 90 °C, de préférence entre 60 et 85 °C, et en ce que le pH de la polymérisation est compris entre 1,5 et 6,0, de préférence entre 2,0 et 4,5.

9. Utilisation de la dispersion de polymère, fabriquée selon au moins une des revendications 1 à 8, pour la fabrication de liants pour la protection des bâtiments.

10. Utilisation selon la revendication 9 pour la fabrication d'agents de peinture - en particulier des peintures au latex, des enduits synthétiques et des adhésifs pour le bâtiment, en particulier des adhésifs pour carrelage.
